Europäisches Patentamt

European Patent Office

Office européen des brevets

(11) Publication number: **0 242 126**
**A2**

## (12) EUROPEAN PATENT APPLICATION

(21) Application number: 87303085.2

(22) Date of filing: 09.04.87

(51) Int. Cl.4: **G06K 19/06**

(30) Priority: 10.04.86 JP 83800/86

(43) Date of publication of application:
**21.10.87 Bulletin 87/43**

(84) Designated Contracting States:
**DE FR GB**

(71) Applicant: **MITSUBISHI DENKI KABUSHIKI
KAISHA**
**2-3, Marunouchi 2-chome Chiyoda-ku
Tokyo 100(JP)**

(72) Inventor: **Hiroshi, Gamou c/o Mitsubishi Denki
K.K.**
**Kitaitami Seisakusho 1, Mazuhara 4-chome
Itami-shi Hyogo-ken(JP)**
Inventor: **Inoue, Takeshi c/o Mitsubishi Denki
K.K.**
**Kitaitami Seisakusho 1, Mazuhara 4-chome
Itami-shi Hyogo-ken(JP)**

(74) Representative: **Barnard, Eric Edward et al
BROOKES & MARTIN High Holborn House
52/54 High Holborn
London WC1V 6SE(GB)**

(54) IC card and IC card system.

(57) An IC card system comprises an IC card (10) containing a semiconductor module (1) with a CPU (1a) and a memory (1b) and a display region (3) for displaying the contents of the memory (1b). The IC card is inserted into a terminal (30) which, reads the contents of the memory, and controls the display provided on the card in accordance with the contents of the memory.

FIG. 3

# IC CARD AND IC CARD SYSTEM

## FIELD OF THE INVENTION

This invention relates to an integrated circuit (hereinafter IC) card and IC card system composed of an IC card and an IC card terminal.

## BACKGROUND TO THE INVENTION

IC cards employ a CPU and a memory and can therefore perform internal data processing functions (CPU functions) and memory functions. Because of the CPU functions, the cards permit accurate verification of the holder and the card itself and so forth, and prevent unauthorized data reading, writing, and alteration. Since the memory capacity can be relatively large IC cards are not only a substitute for conventional magnetic cards but also usable for new applications.

For example, an IC card can be used as a coupon ticket and the typical procedure for using the card is as follows. First, the issuer of the card stores the amount of money or number of times the card can be used in the memory section of the IC card using a specific code number and keyword not known to others. The user purchasing this card inserts it into a terminal controlled by the issuer each time he uses the card, and the number of times or amount of money used is subtracted. Additionally, if an electrically erasable and programmable memory (EEPROM) is used for the card memory, when the remaining amount of money or number of times reaches zero, the user can bring the card to the issuer and by paying money, the usable amount of money or number of times can be stored in the card again. This allows the same card to be used as a coupon ticket any number of times. This has the benefit of allowing the user to purchase a desired number of usable times, unlike conventional coupon tickets which have a fixed number of usable times.

Furthermore, because the card itself possesses calculation functions it is easily possible to use the card for multiple purposes, for example for buses, trains, etc., and to make the basis for settlement price rather than usage (coupon ticket settlement). In addition, cards issued by different issuers can be used interchangeably and settlement can be made easily by use of the CPU and memory functions of the card.

IC cards have the added advantage that forgery or malicious data writing into the cards is extremely difficult, and the cards are therefore superior to magnetic cards in this regard.

However, hitherto when IC cards are used as coupon tickets, as in the above example, there is the drawback that the remaining amount of money or number of usable times left cannot be easily determined by simple observation.

## SUMMARY OF THE INVENTION

An object of the invention is to provide an improved IC card and IC card system.

An IC card in accordance with the invention comprises a substrate containing a semiconductor module with a CPU, a memory and electrodes and a visual display for displaying the data stored by the memory. The IC card is thus characterized by a rewritable display on the IC card, which can be rewritten whenever the data of the internal memory is changed, in accordance with the prevailing data in the memory section.

The card is usable with a terminal which receives the card and accesses the memory and CPU. The terminal preferably employs control means which interacts with the CPU and the memory to read/write or alter the memory, and control the display provided by the display region of the card in accordance with the stored data.

The provision of the display in the card permits easy visual confirmation or recognition of information such as the remaining amount of money left or number of usable times left, or any other value stored in the memory of the IC card. The range of applications of the IC cards can be considerably increased by adopting the measures discussed hereinafter.

The invention may be understood more readily and various other aspects and features of the invention may become apparent from consideration of the following description.

## BRIEF DESCRIPTION OF THE DRAWINGS

In the accompanying drawings:-

Fig. 1 is a plan view of an IC card used in an IC card system in accordance with the invention;

Fig. 2 is an enlarged sectional view of the display region of the card;

Fig. 3 is a schematic diagram showing the functional blocks of the IC card system;

Fig. 4 is a schematic diagram showing the disposition of and interconnection between various elements and parts within the terminal of the system;

Fig. 5 to Fig. 7 are diagrams showing other card displays for IC cards in accordance with the invention; and

Fig. 8 is a block diagram showing components of the semiconductor module of the IC card.

## DESCRIPTION OF PREFERRED EMBODIMENTS

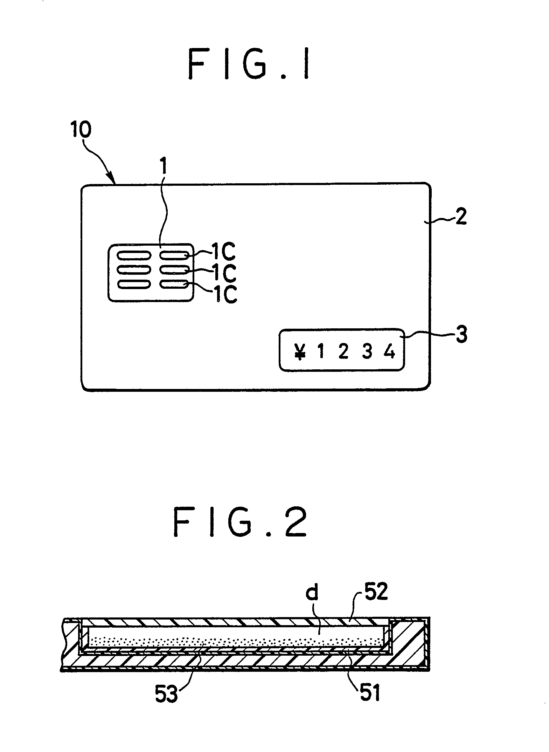

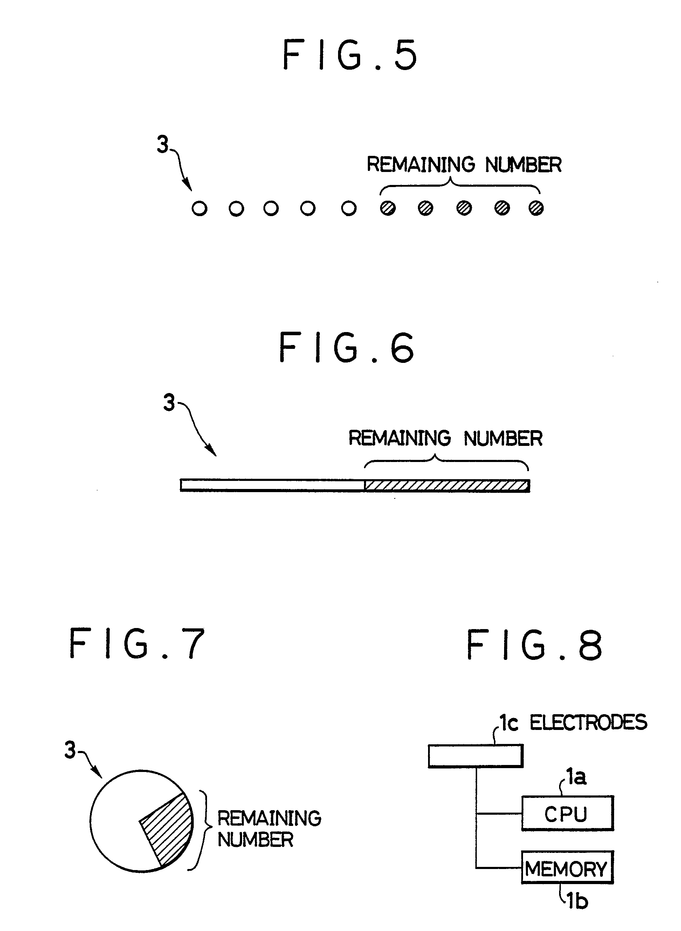

Fig. 1 shows an IC card 10 constructed in accordance with the invention. The IC card 10 has a plastics substrate 21 in which a semiconductor module 1 is embedded. As shown in Fig. 8, the semiconductor module 1 comprises a CPU 1a, a semiconductor memory 1b, electrodes 1c for access to the CPU and memory and a wiring board, not shown, for the attachment and interconnection of these components 1a, 1b, 1c. The IC card 10 further comprises a visual magnetic display region 3 which is also embedded in the substrate 2.

The CPU 1a of the IC card 10 also has verification functions and data protection functions which prohibit data alteration, reading, and writing according to the verification results, i.e., when the verification is unsuccessful. The memory 1b is used to store values such as the remaining amount of money or number of times the card can be used where the IC card is used as a coupon ticket.

An example of the visual magnetic display region 3 is shown in Fig. 2. The display region 3 is composed of magnetic particles 53 with a high permeability enclosed together with a special minute powder fluidizing material in a space d formed between a magnetic recording sheet 51 and a transparent sheet 52. Magnetizing the magnetic recording sheet 51 with a desired pattern will cause the magnetic particles to be attracted there and become visible. An example of such a display is shown in Japanese Utility Model Application Laid-Open Publication No 151924/1983, in which the N-poles and S-poles of magnet IC particles are coloured differently and rotate in dependence on the external magnetic field applied thereto to display different colours.

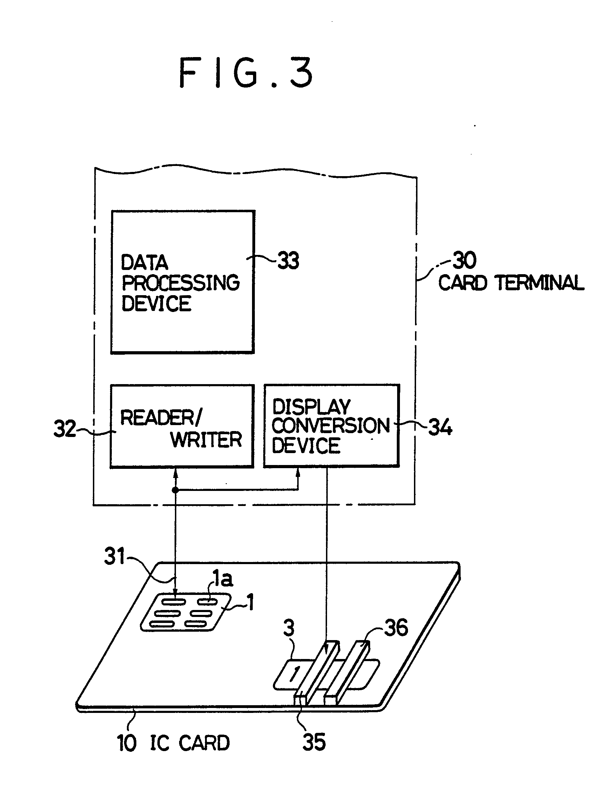

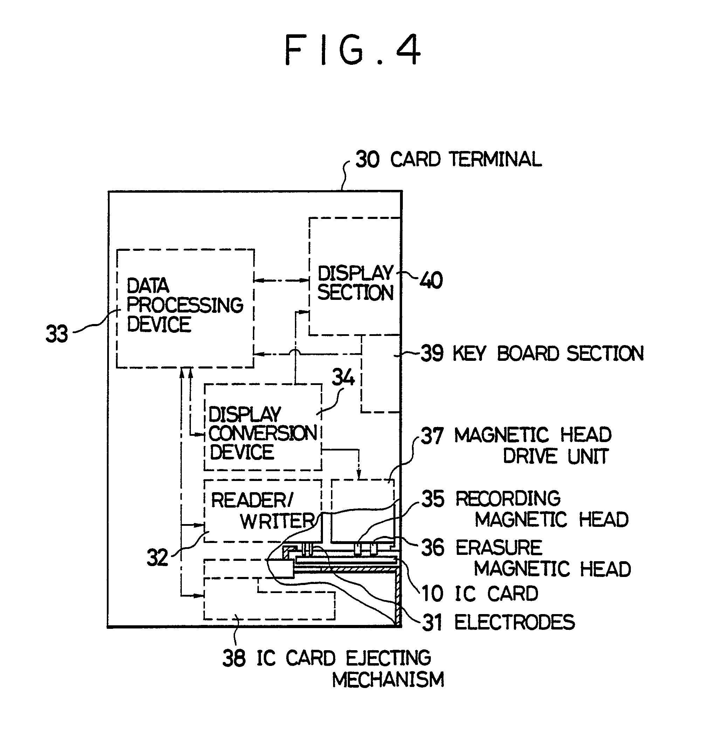

The IC card 10 is used with a card terminal 30 shown in Figs. 3 and 4. The card terminal 30 is provided with electrodes 31 for contact with the electrodes 1c on the IC card 10 for reading and writing data from and into the memory 1b, a reader/writer 32 for exchanging data with the IC card 10, a data processing device 33 for performing data calculation or processing, a display conversion device 34 for preparing the data to be displayed by the display region 3 of the IC card 10, a magnetic head 35 for recording data and a magnetic head 36 for erasing data. The card terminal 30 further comprises a magnetic head drive unit 37 for controlling the electric current for magnetizing the magnetic heads 35 and 36, and an IC card ejecting mechanism 38 for pushing out the IC card 10 when the processing (reading/writing on the memory and controlling the display on the IC card) is completed. The card terminal 30 further comprises a key board 39 for inputting data into the data processing device 33 of the card terminal 30 and allowing other manipulation of the devices of the terminal 30, and a display 40 for displaying various data such as visual commands.

The operation of the system will be described with reference to the block diagram of Fig. 3.

Fig. 3 shows the IC card 10 inserted into the card terminal 30. When the card 10 is inserted into the card terminal 30, the electrodes 1c of the module 1 comes into contact with the electrodes 31 of the terminal 30 and data are exchanged between the data processing device 33 and the memory 1b through the CPU 1a of the IC card 10 according to the control signals from the reader/writer 32 of the terminal 30. After verification of the card, such as confirmation of the issuer and confirmation of the point of boarding, and calculation of travelled distance and fare, etc., settlement is made and the remaining total is recorded in the memory section 1b of the IC card 10. A previous display indication on the region 3 is erased by the erasure head 36 and the stored data of the memory section 1b is read to the display conversion device 34. Here it is converted to a numeric character pattern and the above-mentioned remaining total is displayed by the display region 3 of the card 10 through the action of the recording magnetic head 36.

In this embodiment, as the remaining amount of money is always displayed on the card 10 itself it is convenient to use this system for coupon tickets, etc.

Although a running total numeric indication can be made by the display region 3, other types of display can also be made, for instance percentange indication (percentage with respect to the initial value stored in the IC card) a figure based on the number of times used, such as the erasing of dots shown in Fig. 5, indication by bar length as shown in Fig. 6 or indication by a pie-chart circle as shown in Fig. 7, can be adopted. Other display patterns in which the area or proportion thereof to the total area of a certain colour or brightness level is varied with the value of the contents of the memory can also be used. The selection between various types of display can be made to suit the particular use or the field of application.

As described above, this invention provides a display on the card itself and when the card is used, and the contents of the memory of the card are changed, the new contents are read by the terminal and the card display is changed according to the new contents. It is therefore possible to realize an IC card system useful for application in various fields.

## Claims

1. An IC card system comprising an IC card (10) containing a semiconductor module (1) with a CPU (1a) and a memory (1b) and a display region (3) for displaying data stored in the memory, and a card terminal (30) for receiving the IC card, the terminal employing control means (32, 34) which interacts with the CPU and the memory to read/write or alter the memory (1b), and control the display provided by the display region of the card in accordance with the stored data.

2. An IC card system according to claim 1, wherein the CPU of the IC card has verification functions and data protection functions which prevent data alteration, reading, and writing according to said verification results.

3. An IC card system according to claim 1 or 2, wherein the display region (3) of the IC card comprises a magnetic recording medium which can be altered to display various visible images, and the control means of the card terminal includes a magnetic head (35, 36) for affecting the magnetic recording medium.

4. An IC card system according to any one of claims 1 to 3, wherein the control means of the card terminal serves to read the stored data in the memory of the IC card and to convert the stored data of the memory into display pattern data and controls the display of the display region in accordance with the display pattern.

5. An IC card for use in an IC card system; said IC card comprising a substrate containing a semiconductor module (1) with a CPU (1a), a memory (1b) and electrodes (1c) and a visual display (3) for displaying the data stored by the memory (1b).

6. An IC card according to claim 5, wherein the display (3) includes a magnetic medium which interacts with a magnetic head which reads the stored data.

# FIG.1

10

1

1C
1C
1C

2

¥ 1 2 3 4

3

# FIG.2

d 52

53 51

# FIG.3

DATA PROCESSING DEVICE 33

30 CARD TERMINAL

32 READER/ WRITER

DISPLAY CONVERSION DEVICE 34

31

1a

1

3

36

35

10 IC CARD

# F I G . 4

30 CARD TERMINAL

DATA PROCESSING DEVICE

33

DISPLAY SECTION ~40

39 KEY BOARD SECTION

34

DISPLAY CONVERSION DEVICE

37 MAGNETIC HEAD DRIVE UNIT

READER/ WRITER

35 RECORDING MAGNETIC HEAD

32

36 ERASURE MAGNETIC HEAD

10 IC CARD

31 ELECTRODES

38 IC CARD EJECTING MECHANISM

# F I G . 5

3

REMAINING NUMBER

○ ○ ○ ○ ○ ⊘ ⊘ ⊘ ⊘ ⊘

# F I G . 6

3

REMAINING NUMBER

# F I G . 7

3

REMAINING
NUMBER

# F I G . 8

1c ELECTRODES

1a

CPU

MEMORY

1b